# EUROPEAN PATENT APPLICATION

(11) **EP 4 692 582 A1**
(43) Date of publication of application: **11.02.2026**
(21) Application number: 25191057.6
(22) Date of filing: 22.07.2025
(51) Int. Cl.: F16D 3/12, F16D 3/14, F16F 15/12

(54) **TORQUE TRANSMITTING DEVICE, TRANSMISSION ASSEMBLY AND VEHICLE**

(30) Priority: 01.08.2024 CN 202421853697 U
(71) Applicant: Nanjing Valeo Clutch Co., Ltd., Nanjing, Jiangsu 211153 (CN)
(72) Inventor: HE, Yuxi, Nanjing, Jiangsu, 211153 (CN)
(74) Representative: Valeo Powertrain Systems

(57) **Abstract**

The present disclosure relates to a torque transmission device, comprising: a torque input assembly and a torque output assembly arranged around an axis of rotation (X), and a first hysteresis assembly and a second hysteresis assembly arranged to retard a relative rotation between the torque input assembly and the torque output assembly by means of friction, the first hysteresis assembly having a first hysteresis amount H1, and the second hysteresis assembly having a second hysteresis amount H2. When the torque input assembly is in a negative position, the relative rotation between the torque input assembly and the torque output assembly is subjected to a total hysteresis amount H=H1+H2; when the torque input assembly is in a positive position, only the second hysteresis assembly plays a hysteresis role, and the relative rotation between the torque input assembly and the torque output assembly (120) is subjected to a total hysteresis amount H=H2. The present disclosure further relates to a transmission assembly comprising the above-mentioned torque transmission device and a vehicle comprising such a transmission assembly.

## Description

### TECHNICAL FIELD

The present disclosure relates to a torque transmission device and a transmission assembly comprising the torque transmission device. In particular, the torque transmission device comprises a plurality of hysteresis assemblies, which can generate different hysteresis amounts under different working conditions to meet vehicle driving requirements.

### Background Art

The torque produced by the engine of a vehicle engine is usually inconstant and fluctuates frequently. Such inconstant torque may be transmitted to the gearbox, causing the gearbox to vibrate and thus generating particularly undesirable noise or impacts, etc. The provision of a torque fluctuation absorbing mechanism in the drivetrain of a vehicle, to reduce the adverse effects of vibration and improve vehicle driving comfort, is already known. The torque fluctuation absorbing mechanism may allow fluctuations in the torque generated by the vehicle engine to be limited and absorbed. It is known that the torque fluctuation absorbing mechanism may comprise a torsional vibration damper and a torque limiter. A torsional vibration damper usually absorbs and reduces torque fluctuations by a spring structure, while a torque limiter can limit a torque fluctuation that exceeds the maximum torque allowed by the torsional vibration damper.

The torsional vibration damper generally comprises a torque input portion, a torque output portion and a spring arranged to be circumferentially compressed between the two. The torque input portion and the torque output portion can rotate relative to each other, and the spring can absorb and reduce the fluctuations in torque by compression and extension. A hysteresis assembly may also be arranged in the torsional vibration damper to generate hysteresis on the torque transmission between the torque input portion and the torque output portion by means of friction, and to attenuate the fluctuations in torque.

Vehicles experience a variety of working conditions during use, and these working conditions have different requirements for the hysteresis of the torsional vibration damper. For example, when a vehicle is started, the torque fluctuations generated by the engine are large, and it is desirable that the torsional vibration damper has a large hysteresis to attenuate the fluctuations in the torque; when the vehicle is running normally, it is desirable that the torsional vibration damper has a small hysteresis to improve the dynamic response sensitivity of the vehicle.

Therefore, there is an urgent need for a torque transmission device which has different hysteresis amounts under different working conditions to meet the requirements of different vehicle working conditions.

### SUMMARY OF THE INVENTION

Therefore, the present disclosure is intended to solve the above-mentioned problems, and an objective thereof is to provide a torque transmission device, which has different hysteresis amounts under different working conditions to meet the driving requirements of the vehicle.

The objective is achieved by a torque transmission device according to an embodiment of the present disclosure. The torque transmission device comprises: a torque input assembly arranged around an axis of rotation, comprising a first cover plate; a torque output assembly arranged around the axis of rotation, comprising a drive plate, wherein when the torque input assembly and the torque output assembly do not rotate relative to each other, the torque input assembly is at a zero position, the torque input assembly is able to rotate relative to the torque output assembly from the zero position along a first circumferential direction to a positive position, and the torque input assembly is able to rotate relative to the torque output assembly from the zero position along a second circumferential direction to a negative position, the second circumferential direction being opposite to the first circumferential direction; a first hysteresis assembly arranged to retard the relative rotation between the torque input assembly and the torque output assembly by means of friction, the first hysteresis assembly having a first hysteresis amount H1; and a second hysteresis assembly arranged to retard the relative rotation between the torque input assembly and the torque output assembly by means of friction, the second hysteresis assembly having a second hysteresis amount H2. When the torque input assembly is at the negative position, the first hysteresis assembly and the second hysteresis assembly both play a hysteresis role, so that the relative rotation between the torque input assembly and the torque output assembly is subjected to a total hysteresis amount H=H1+H2. When the torque input assembly is at the positive position, only the second hysteresis assembly plays a hysteresis role, so that the relative rotation between the torque input assembly and the torque output assembly is subjected to a total hysteresis amount H=H2.

H=H1+H2 means the total hysteresis amount is equal to the sum of the first hysteresis amount and second hysteresis amount.

H=H2 means the total hysteresis amount is equal to the second hysteresis amount.

One of the objectives of the present disclosure is to provide a torque transmission device having different hysteresis amounts in different working states. The torque transmission device according to the present disclosure comprises a first hysteresis assembly and a second hysteresis assembly, wherein whether the first hysteresis assembly can play a hysteresis role can be adjusted according to the relative circumferential position between the torque input assembly and the torque output assembly, so that the total hysteresis amount of the torque transmission device changes, thereby meeting the hysteresis requirements of the torque transmission device under different vehicle working conditions.

For example, when the vehicle starts, the torque output by the engine fluctuates greatly, the relative rotation between the torque input assembly and the torque output assembly varies greatly, and the torque input assembly can vibrate back and forth between the positive position and the negative position. When the torque input assembly is at the negative position, both the first hysteresis assembly and the second hysteresis assembly play a hysteresis role, generating a large total hysteresis amount, thereby enabling vibrations to be quickly attenuated. When the vehicle is running normally, the torque output by the engine fluctuates slightly, and the torque input assembly is always in a positive position to apply torque to the wheels. At this time, only the second hysteresis assembly plays a hysteresis role, and the total hysteresis amount is small, which can improve the response speed of the torque transmission device to torque changes, thereby improving the dynamic response sensitivity of the vehicle.

The torque transmission device according to the present disclosure may also have one or more of the following features alone or in combination.

According to one embodiment of the present disclosure, the first hysteresis assembly comprises: a retaining plate fastened to the first cover plate, wherein the first cover plate and the retaining plate are axially located on a same side of the drive plate; a hysteresis plate, wherein the hysteresis plate is axially arranged between the first cover plate and the retaining plate; and a first hysteresis spring, wherein the first hysteresis spring is axially arranged between the first cover plate and the hysteresis plate and axially biases the hysteresis plate against the retaining plate. When the torque input assembly is at the negative position, the hysteresis plate is circumferentially coupled to the torque output assembly so as to rotate relative to the retaining plate, and friction between the hysteresis plate and the retaining plate generates a first sub-hysteresis amount h1 which constitutes at least a part of the first hysteresis amount H1. When the torque input assembly is at the positive position, the hysteresis plate is able to freely rotate relative to the torque output assembly. Therefore, when the torque input assembly is at the positive position, the hysteresis plate can rotate with the retaining plate, and no friction is generated between the two, so that the first sub-hysteresis amount h1 is no longer generated.

According to one embodiment of the present disclosure, the second hysteresis assembly comprises: a collar, wherein the collar is clamped between the retaining plate and the drive plate, the collar is able to freely rotate about the axis of rotation (X) so as to rotate relative to the retaining plate and/or the drive plate, friction between the collar and the drive plate and/or the retaining plate generates a third sub-hysteresis amount h3 which constitutes a part of the second hysteresis amount H2.

According to the above features, the friction between the collar and the drive plate and/or the retaining plate increases the second hysteresis amount H2 generated by the second hysteresis assembly, thereby increasing the total hysteresis amount of the torque transmission device when the torque input assembly is at the positive position. When the vehicle is turned off, the torque input assembly returns to the zero position from the positive position, and there are large vibrations in the process. Properly increasing the positive hysteresis amount of the torque transmission device can attenuate such vibrations more quickly and improve the ride comfort of the vehicle.

According to one embodiment of the present disclosure, the torque output assembly further comprises an output hub fastened to the drive plate, and the second hysteresis assembly further comprises: a first bushing configured to be sleeved on the output hub and circumferentially locked relative to the first cover plate; and a second hysteresis spring, wherein the second hysteresis spring is axially arranged between the first cover plate and the first bushing and axially biases the first bushing against the output hub. Friction between the first bushing and the output hub generates a fourth sub-hysteresis amount h4 which constitutes a part of the second hysteresis amount H2.

According to one embodiment of the present disclosure, the torque input assembly further comprises a second cover plate fastened to the first cover plate, the second cover plate and the first cover plate being respectively located on two axial sides of the drive plate, and the second hysteresis assembly further comprises: a second bushing configured to be sleeved on the output hub and circumferentially locked relative to the first cover plate, the second bushing and the first bushing being respectively located on two axial sides of the drive plate; and a third hysteresis spring, wherein the third hysteresis spring is axially arranged between the second cover plate and the second bushing and axially biases the second bushing towards the drive plate, wherein the second bushing comprises a first portion biased against the drive plate, and friction between the first portion and the drive plate generates a fifth sub-hysteresis amount h5 which constitutes a part of the second hysteresis amount H2.

According to one embodiment of the present disclosure, the second bushing further comprises a second portion axially biased against the output hub, and friction between the second portion and the output hub generates a sixth sub-hysteresis amount h6 which constitutes a part of the second hysteresis amount H2.

According to one embodiment of the present disclosure, the output hub is provided with a coupling section which is circumferentially locked with the drive plate in a form-fitting manner, the first bushing is axially biased against a first end face of the coupling section, and the second portion of the second bushing is axially biased against a second end face of the coupling section.

According to one embodiment of the present disclosure, the first hysteresis assembly further comprises a pressure plate configured to be circumferentially locked relative to the first cover plate, wherein the pressure plate is axially arranged between the first hysteresis spring and the hysteresis plate, so that the first hysteresis spring axially biases the pressure plate against the hysteresis plate. When the torque input assembly is at the negative position, the hysteresis plate rotates relative to the pressure plate, and friction between the hysteresis plate and the pressure plate generates a second sub-hysteresis amount h2 that constitutes at least a part of the first hysteresis amount H1.

According to one embodiment of the present disclosure, the first hysteresis assembly further comprises: an intermediate plate, the intermediate plate being circumferentially coupled to the hysteresis plate, wherein when the torque input assembly is at the negative position, the intermediate plate rotates together with the drive plate, and wherein when the torque input assembly is at the positive position, the intermediate plate is able to freely rotate relative to the drive plate.

According to the above features, when the torque input assembly is at the negative position, the hysteresis plate can rotate with the drive plate of the torque output assembly through the circumferential coupling with the intermediate plate, and the retaining plate is circumferentially locked with the first cover plate of the torque input assembly, so that the two can rotate relative to each other, and the first sub-hysteresis amount h1 is generated by means of friction. Conversely, when the torque input assembly is at the positive position, the intermediate plate can freely rotate relative to the drive plate, and the hysteresis plate can rotate with the retaining plate at this time, so that the first sub-hysteresis amount h1 is no longer generated.

According to one embodiment of the present disclosure, the torque transmission device further comprises a damping spring configured to be circumferentially compressed between the torque input assembly and the torque output assembly, wherein the drive plate is provided with a spring slot configured to accommodate the damping spring, and the intermediate plate comprises a first drive tooth extending into the spring slot at a circumferential end of the spring slot. When the torque input assembly is at the negative position, the damping spring presses the first drive tooth circumferentially against the circumferential end of the spring slot; and when the torque input assembly is at the positive position, the damping spring no longer biases the first drive tooth. Thus, when the torque input assembly is at the negative position, the intermediate plate is biased by the damping spring to rotate with the drive plate; when the torque input assembly is at the positive position, the intermediate plate is no longer biased by the damping spring, so that it can freely rotate relative to the drive plate.

According to one embodiment of the present disclosure, the intermediate plate comprises first stop teeth extending axially towards the hysteresis plate, and the hysteresis plate comprises radially extending second stop teeth, wherein the second stop tooth is inserted into a circumferential spacing between two adjacent first stop teeth.

According to one embodiment of the present disclosure, the circumferential spacing between the first stop teeth of the intermediate plate is greater than a circumferential dimension of the second stop teeth of the hysteresis plate, or the circumferential spacing between the first stop teeth of the intermediate plate is substantially equal to the circumferential dimension of the second stop teeth of the hysteresis plate.

According to one embodiment of the present disclosure, the torque transmission device further comprises a damping spring configured to be circumferentially compressed between the torque input assembly and the torque output assembly, wherein the drive plate is provided with a spring slot configured to accommodate the damping spring, and the hysteresis plate comprises a second drive tooth extending into the spring slot at a circumferential end of the spring slot. When the torque input assembly is at the negative position, the damping spring presses the second drive tooth circumferentially against the circumferential end of the spring slot. When the torque input assembly is at the positive position, the damping spring no longer biases the second drive tooth.

According to one embodiment of the present disclosure, the retaining plate comprises a first radial extension portion, a second radial extension portion located radially outside the first radial extension portion and axially spaced apart from the first radial extension portion, and an axial extension portion connecting the first radial extension portion and the second radial extension portion, wherein the retaining plate is riveted to the first cover plate at the first radial extension portion, and the hysteresis plate is arranged between the first cover plate and the second radial extension portion.

According to one embodiment of the present disclosure, the collar comprises a radial ring and an axial ring, wherein the radial ring is clamped between the second radial extension portion of the retaining plate and the drive plate, and the axial ring is inserted into the axial extension portion.

According to one embodiment of the present disclosure, locking holes are provided on the first cover plate, and the pressure plate comprises locking teeth extending axially towards the first cover plate and inserted into the locking holes, wherein the locking teeth and the locking holes have substantially equal circumferential dimensions.

According to one embodiment of the present disclosure, the collar, the retaining plate, the hysteresis plate and/or the output hub are made of metal, and the first bushing and/or the second bushing are made of plastic.

The present disclosure further relates to a transmission assembly, comprising the torque transmission device as described above and a torque limiter. The torque limiter comprises an input portion and an output portion, and the torque limiter is configured to transmit a torque less than a predetermined threshold from the input portion to the output portion. The output portion of the torque limiter is circumferentially locked with the torque input assembly of the torque transmission device.

The present disclosure further relates to a vehicle, comprising the transmission assembly as described above.

### Brief Description of the Drawings

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 is a schematic view of a transmission assembly according to an embodiment of the present disclosure.
Fig. 2 is a cross-sectional view of the transmission assembly according to the embodiment of the present disclosure.
Fig. 3 is an enlarged view of a portion of Fig. 2, in which a first hysteresis assembly and a second hysteresis assembly of a torque transmitting device are shown in detail.
Fig. 4 shows a first cover plate in the embodiment shown in Fig. 3.
Fig. 5 shows a pressure plate in the embodiment shown in Fig. 3.
Fig. 6 shows a retaining plate in the embodiment shown in Fig. 3.
Fig. 7 shows a hysteresis plate in the embodiment shown in Fig. 3.
Fig. 8 shows a drive plate in the embodiment shown in Fig. 3.
Fig. 9 shows a collar in the embodiment shown in Fig. 3.
Fig. 10 shows an output hub in the embodiment shown in Fig. 3.
Fig. 11 shows an intermediate plate in the embodiment shown in Fig. 3.
Fig. 12 shows the cooperation between the hysteresis plate and the intermediate plate in an enlarged view.
Fig. 13 shows a first hysteresis spring in the embodiment shown in Fig. 3.
Fig. 14 shows a second hysteresis spring in the embodiment shown in Fig. 3.
Fig. 15 shows a third hysteresis spring in the embodiment shown in Fig. 3.

In the drawings, identical or similar components are indicated by identical reference numerals.

### Detailed Description of the Embodiments

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. Words such as "comprise" or "include" mean that the element or object appearing before the word encompasses the elements or objects and their equivalents listed after the word, without excluding other elements or objects. Although expressions such as "first" and "second" are used to describe various elements of the present disclosure, they are only intended to distinguish one component from another, rather than limiting the sequence or importance of the corresponding elements. Without departing from the scope of the present disclosure, "first element" may be written as "second element", and, similarly, "second element" may be written as "first element". The terms "upper", "lower", "left", "right" and the like are only used to indicate a relative positional relationship, and when the absolute position of a described object changes, the relative positional relationship may also change accordingly. "Axial direction", "radial direction", "circumferential direction", and other directions are defined relative to an axis of rotation X of a torque transmission device, wherein the axial direction is the direction of extension of the axis of rotation X, the radial direction is the direction perpendicular to the axis of rotation X, and the circumferential direction is the direction of a circumference around the axis of rotation X.

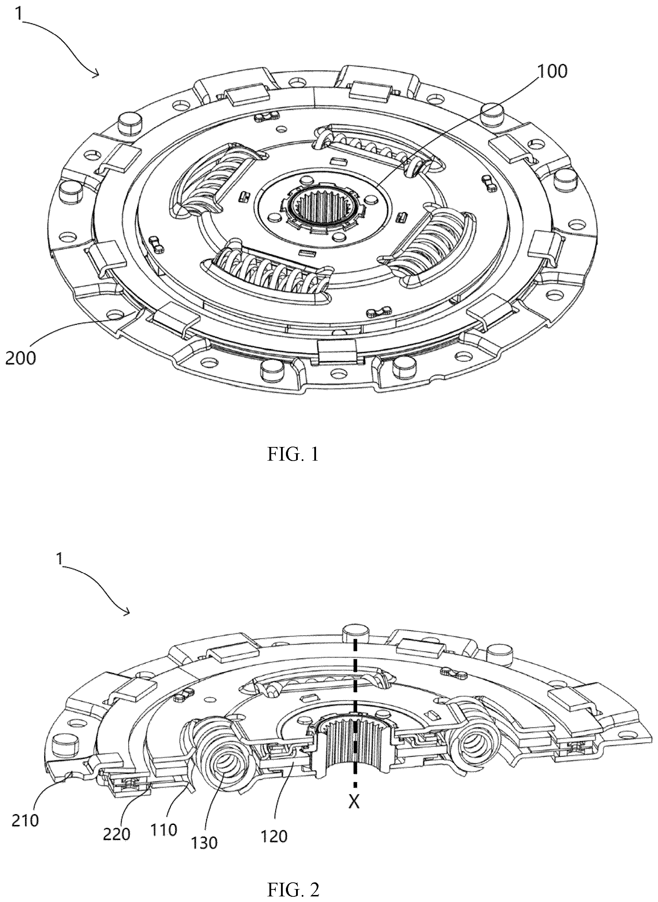

Fig. 1 is a schematic drawing of a transmission assembly 1 according to an embodiment of the present disclosure. Fig. 2 is an exploded view of the transmission assembly shown in Fig. 1.

The transmission assembly 1 may be used to transmit torque between an engine and a gearbox of a vehicle. The transmission assembly 1 may be divided into two parts: a torque transmission device 100 and a torque limiter 200. The torque limiter 200 is connected to a crankshaft of the vehicle engine and is driven by the crankshaft to transmit torque around an axis of rotation X. The torque transmission device 100 is located inside the torque limiter 200 as a whole, and outputs the torque transmitted by the torque limiter 200 to the gearbox of the vehicle. The torque limiter 200 comprises an input portion 210 and an output portion 220. The torque transmitted from the input portion 210 to the output portion 220 has a predetermined threshold. When the torque generated by the engine exceeds the predetermined threshold, relative slip will occur between the input portion 210 and the output portion 220 in the circumferential direction, so that the torque transmitted to the output portion 220 will not exceed the predetermined threshold.

With reference to Figs. 1 and 2, the torque transmission device 100 has a torque input assembly 110 and a torque output assembly 120 which are arranged around the axis of rotation X and rotatable about the axis of rotation X, and a damping spring 130 which is arranged to be circumferentially compressed between the torque input assembly 110 and the torque output assembly 120. The torque input assembly 110 is fixed to the output portion 220 of the torque limiter 200 to receive the torque transmitted from the torque limiter 200. The spring 130 is a coil spring, one end of which is acted on by the torque input assembly 110, and the other end of which acts on the torque output assembly 120 to transmit the torque from the torque input assembly 110 to the torque output assembly 120. That is, the torque transmission device 100 may be implemented as a torsional vibration damper.

Relative rotation may occur between the torque input assembly 110 and the torque output assembly 120. Specifically, when the torque input assembly 110 and the torque output assembly 120 do not rotate relative to each other, the torque input assembly 110 is at a zero position. The torque input assembly 110 can rotate from the zero position to a positive position along a first circumferential direction relative to the torque output assembly 120. Without loss of generality, the positive position corresponds to a driving side where the torque input assembly 110 applies torque to the torque output assembly 120 to drive the vehicle to run. The torque input assembly 110 can also rotate from the zero position to the negative position along a second circumferential direction relative to the torque output assembly 120, the second circumferential direction being opposite to the first circumferential direction. The negative position corresponds to a dragging side where the torque applied by the torque input assembly 110 to the torque output assembly 120 is insufficient to meet the driving requirements of the vehicle. An embodiment in which the first circumferential direction corresponds to a counter-clockwise direction and the second circumferential direction corresponds to a clockwise direction will be described below. It can be understood that the first circumferential direction and the second circumferential direction may also be set to correspond to the clockwise direction and the counter-clockwise direction, respectively.

The relative rotation between the torque input assembly 110 and the torque output assembly 120 may occur when the torque generated by the vehicle engine fluctuates. The spring 130 between the two can absorb and reduce the fluctuations in torque by compression and extension. In order to further attenuate such torque fluctuations and adjust the dynamic torque transmission characteristics of the transmission assembly 1, the torque transmission device 100 further comprises a hysteresis assembly to retard the relative rotation between the torque input assembly 110 and the torque output assembly 120 by means of friction. As will be described in detail below, the hysteresis assembly comprises a first hysteresis assembly 2 having a first hysteresis amount H1 and a second hysteresis assembly 4 having a second hysteresis amount H2. When the torque input assembly 110 is at the negative position, both the first hysteresis assembly 2 and the second hysteresis assembly 4 can play a hysteresis role, and the torque transmission device 100 has a total hysteresis amount H=H1+H2. When the torque input assembly 110 is at the positive position, only the second hysteresis assembly 4 can play a hysteresis role, and the torque transmission device 100 has a total hysteresis amount H=H2.

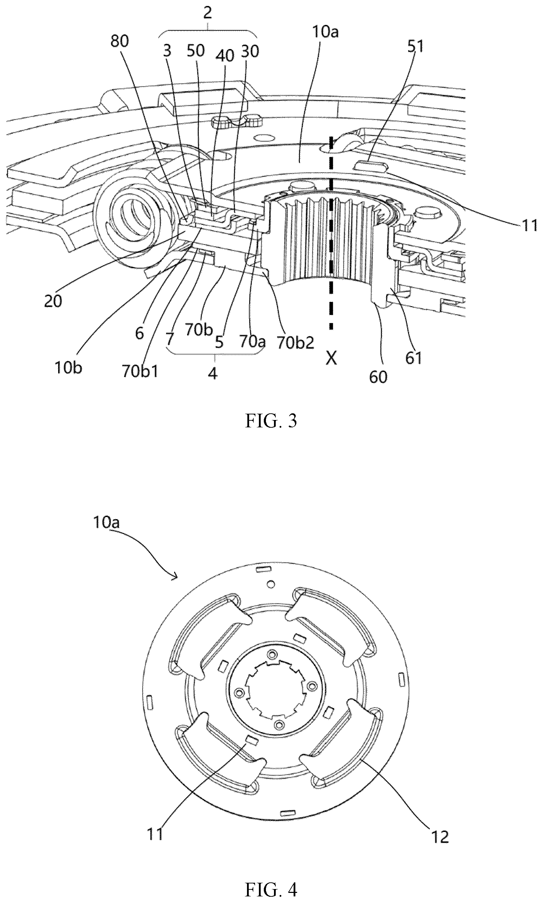

With further reference to Fig. 3, the torque input assembly 110 of the torque transmission device 100 comprises a first cover plate 10a and a second cover plate 10b. The second cover plate 10b is fastened to the first cover plate 10a so as to rotate together with the first cover plate 10a. Either one (the second cover plate 10b in the embodiment shown in Fig. 3) of the first cover plate 10a and the second cover plate 10b is fixed to the output portion 220 of the torque limiter 200 so as to be driven by the torque limiter 200. The torque output assembly 120 comprises a drive plate 20 and an output hub 60. The drive plate 20 is axially arranged between the first cover plate 10a and the second cover plate 10b, and the output hub 60 is circumferentially fastened to the drive plate 20 and may be coupled to a downstream component such as a gearbox input shaft to output the torque.

In the embodiment shown in Fig. 3, the first hysteresis assembly 2 of the torque transmitting device 100 comprises a retaining plate 30, a hysteresis plate 40, a pressure plate 50, an intermediate plate 80 and a first hysteresis spring 3.

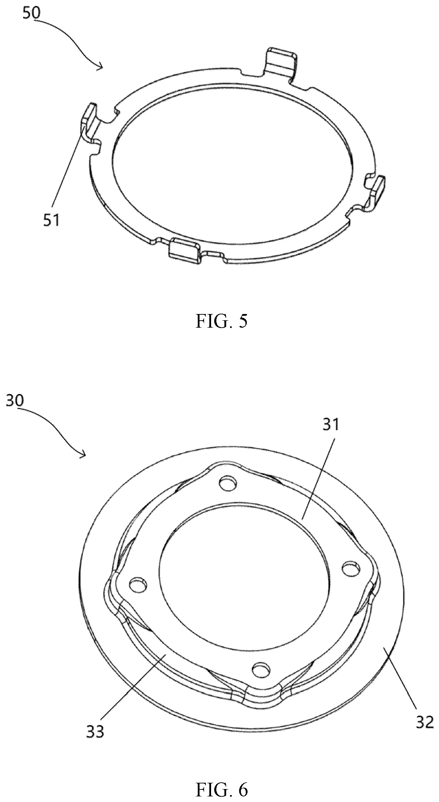

The retaining plate 30 is fastened to the first cover plate 10a so as to rotate together with the first cover plate 10a. With reference to the exemplary embodiment shown in Fig. 6, the retaining plate 30 comprises a first radial extension portion 31, a second radial extension portion 32 located radially outside the first radial extension portion 31 and axially spaced apart from the first radial extension portion 31, and an axial extension portion 33 connecting the first radial extension portion 31 and the second radial extension portion 32. The retaining plate 30 is riveted to the first cover plate 10a at the first radial extension portion 31. Optionally, the retaining plate 30 may also be fastened to the first cover plate 10a by other connection means such as a threaded connection.

The retaining plate 30 and the first cover plate 10a are axially located on the same side (the upper side in Fig. 3) of the drive plate 20. The hysteresis plate 40, the pressure plate 50 and the first hysteresis spring 3 of the first hysteresis assembly 2 are axially arranged between the retaining plate 30 and the first cover plate 10a, and are specifically retained between the second radial extension portion 32 and the first cover plate 10a. The pressure plate 50 is also circumferentially locked relative to the first cover plate 10a. Specifically, locking holes 11 are provided on the first cover plate 10a, and the pressure plate 50 comprises locking teeth 51 (refer to Fig. 5) extending axially towards the first cover plate 10a and inserted into the locking holes 11. The locking teeth 51 and the locking holes 11 have substantially equal circumferential dimensions, so that the pressure plate 50 is circumferentially locked relative to the first cover plate 10a. The locking holes 11 do not hinder the axial movement of the locking teeth 51, so that the pressure plate 50 can move axially relative to the first cover plate 10a.

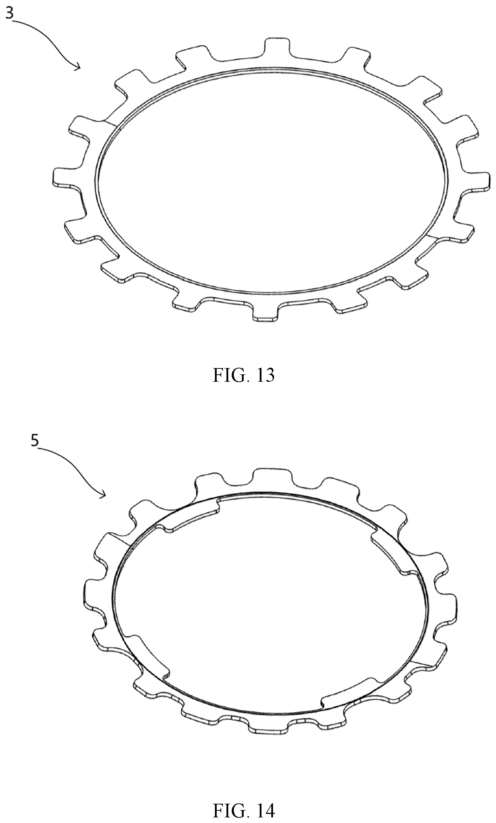

The first hysteresis spring 3 is axially arranged between the pressure plate 50 and the first cover plate 10a, and the hysteresis plate 40 is arranged between the pressure plate 50 and the second radial extension portion 32 of the retaining plate 30. With reference to Fig. 3 and in combination with Fig. 13, the first hysteresis spring 3 is in the form of a plate spring. The first hysteresis spring axially biases the pressure plate 50 towards the hysteresis plate 40, and further axially biases the hysteresis plate 40 against the second radial extension portion 32 of the retaining plate 30. That is, the upper and lower parts of the hysteresis plate 40 come into contact with the pressure plate 50 and the retaining plate 30, respectively. Preferably, the first hysteresis spring 3 is circumferentially locked with the pressure plate 50 (for example, by the cooperation between legs extending radially outwards and the locking teeth 51 of the pressure plate 50), and is further circumferentially locked with the first cover plate 10a.

As described above, the retaining plate 30, the pressure plate 50 and the first hysteresis spring 3 of the first hysteresis assembly 2 are each circumferentially locked with the first cover plate 10a, so as to rotate together with the torque input assembly 110. The intermediate plate 80 and the hysteresis plate 40 of the first hysteresis assembly 2 may rotate relative to the torque input assembly 110.

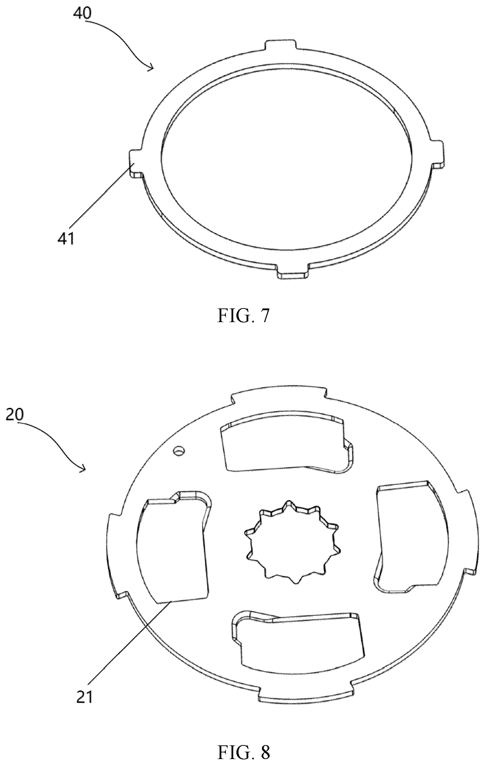

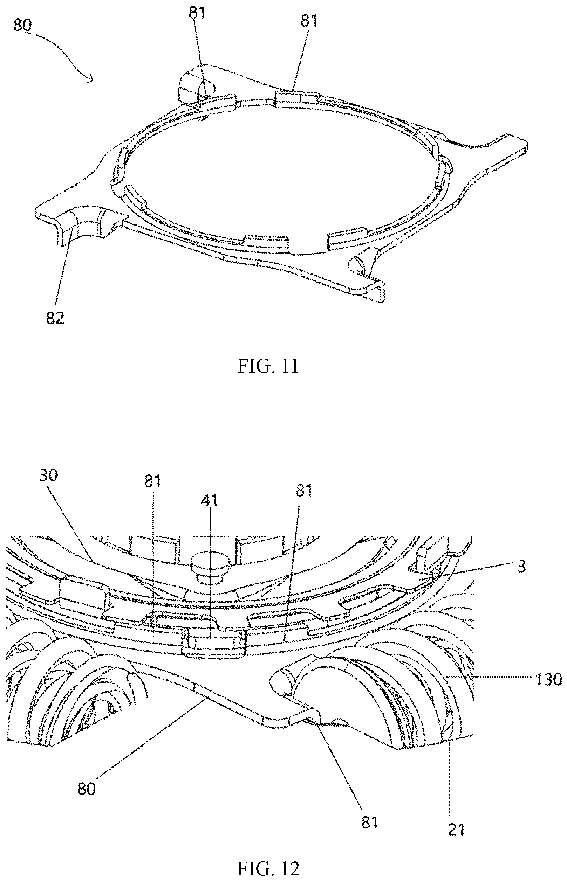

With reference to Fig. 3 and in combination with Figs. 7-8 and 11-12, the intermediate plate 80 is arranged on the radial outer side of the retaining plate 30 as a whole, and comprises first stop teeth 81 extending axially towards the hysteresis plate 40, and the hysteresis plate 40 comprises second stop teeth 41 extending radially. Each second stop tooth 41 is inserted into the circumferential spacing between two adjacent first stop teeth 81, so as to circumferentially couple the hysteresis plate 40 with the intermediate plate 80. The intermediate plate 80 further comprises a first drive tooth 82, which is inserted into a spring slot 21 provided on the drive plate 20 for accommodating the damping spring 130. Specifically, the first drive tooth 82 is arranged at one and only one circumferential end of the spring slot 21. In the non-limiting embodiment shown in the drawings, the torque transmission device 100 comprises four springs 130, the drive plate 20 is provided with four spring slots 21, and the intermediate plate 80 comprises four first drive teeth 82. The four first drive teeth 82 are arranged at the ends of the corresponding spring slots 21 in the second circumferential direction (i.e., the clockwise direction shown in Fig. 12), respectively.

With reference to Figs. 3 and 4, the first cover plate 10a and the second cover plate 10b of the torque input assembly 110 are also provided with corresponding spring slots 12. When the torque input assembly 110 is at the negative position, the damping spring 130 will be compressed by the spring slot 12 in the second circumferential direction, and the first drive tooth 82 of the intermediate plate 80 will be circumferentially pressed against the end of the spring slot 21 of the drive plate 20 in the second circumferential direction, so that the intermediate plate 80 rotates with the drive plate 20. When the torque input assembly 110 is at the positive position, the damping spring 130 will be compressed by the spring slot 12 in the first circumferential direction, and this compression will separate the damping spring 130 from the end of the spring slot 21 in the second circumferential direction and no longer bias the first drive tooth 82. At this time, the intermediate plate 80 can rotate relative to the drive plate 20 and no longer rotate with it. That is, the intermediate plate 80 and the hysteresis plate 40 can freely rotate relative to the torque output assembly 120.

In addition, in an optional embodiment of the present disclosure not shown in the drawings, the intermediate plate may be omitted, and a second drive tooth extending into the spring slot 21 of the moving plate 20 may be provided on the hysteresis plate 40. The configuration of the second drive tooth is similar to that of the first drive tooth 82 described above. When the torque input assembly 110 is at the negative position, the damping spring 130 presses the second drive tooth circumferentially against the circumferential end of the spring slot 21, so that the hysteresis plate 40 rotates with the drive plate 20; when the torque input assembly 110 is at the positive position, the damping spring 130 no longer biases the second drive tooth, and the hysteresis plate 40 can rotate relative to the drive plate 20 and no longer rotates with it.

When the torque input assembly 110 is at the negative position, due to the circumferential coupling between the hysteresis plate 40 and the intermediate plate 80, the hysteresis plate 40 rotates with the drive plate 20, that is, it rotates with the torque output assembly 120. In this way, the hysteresis plate 40 can rotate relative to the retaining plate 30 and the pressure plate 50. The friction between the hysteresis plate 40 and the retaining plate 30 generates a first sub-hysteresis amount h1, and the friction between the hysteresis plate 40 and the pressure plate 50 generates a second sub-hysteresis amount h2. The first hysteresis amount H1 generated by the first hysteresis assembly 2 is composed of the first sub-hysteresis amount h1 and the second sub-hysteresis amount h2, that is, H1=h1+h2.

When the torque input assembly 110 is at the positive position, the hysteresis plate 40 is clamped by the retaining plate 30 and the pressure plate 50 and rotates with the two, and the intermediate plate 80 is also driven via the circumferential coupling with the hysteresis plate 40. Therefore, the first hysteresis assembly 2 rotates with the torque input assembly 110 as a whole, and its components no longer rotate relative to each other, so that hysteresis cannot be generated due to friction.

Therefore, the first hysteresis assembly 2 only plays a hysteresis role when the torque input assembly 110 is at the negative position, and the first hysteresis amount H1=h1+h2 is generated. When the torque input assembly 110 is at the positive position, the first hysteresis assembly 2 no longer plays a hysteresis role.

In addition to the first hysteresis assembly 2, in the embodiment shown in Fig. 3, the second hysteresis assembly 4 of the torque transmitting device 100 comprises a first bushing 70a, a second bushing 70b, a collar 6, a second hysteresis spring 5, and a third hysteresis spring 7.

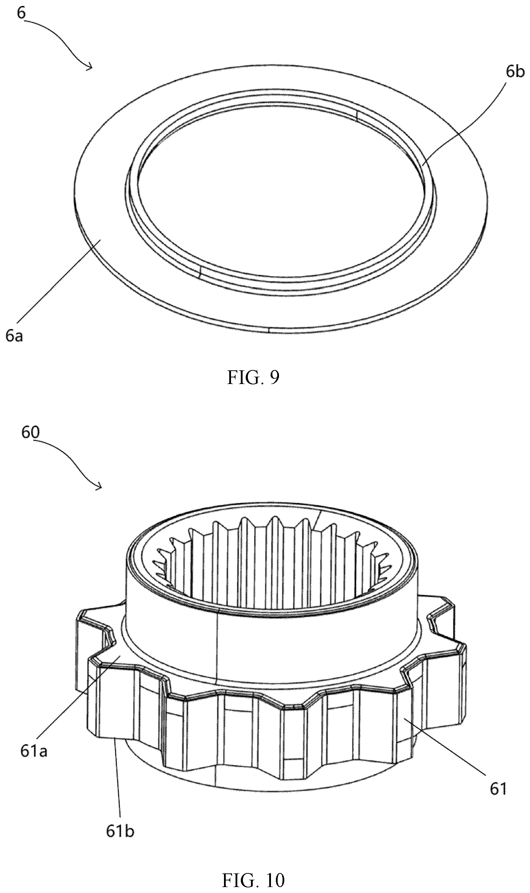

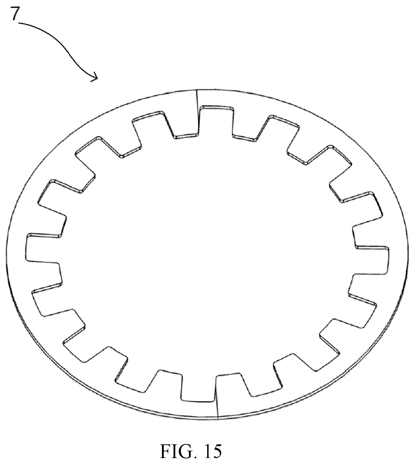

With reference to Fig. 3 and in combination with Figs. 10 and 14-15, the first bushing 70a and the second bushing 70b are sleeved on the output hub 60 on both axial sides of the drive plate 20, respectively. The first bushing 70a and the second bushing 70b are respectively locked circumferentially with the first cover plate 10a and the second cover plate 10b, so that both rotate together with the torque input assembly 110. With reference to Figs. 14 and 15, the second hysteresis spring 5 and the third hysteresis spring 7 are both in the form of a plate spring, the second hysteresis spring 5 is axially arranged between the first cover plate 10a and the first bushing 70a and axially biases the first bushing 70a towards the output hub 60, and the third hysteresis spring 7 is axially arranged between the second cover plate 10b and the second bushing 70b and axially biases the second bushing 70b towards the drive plate 20. Preferably, the second hysteresis spring 5 and the third hysteresis spring 7 are circumferentially locked with the first bushing 70a and the second bushing 70b, respectively (for example, through the cooperation between the teeth extending radially inwards and the locking structures on the corresponding bushings), and then rotate together with the torque input assembly 110.

The first bushing 70a of the second hysteresis assembly 4 has a friction contact surface with the output hub 60, and the second bushing 70b has a friction contact surface with the drive plate 20 to generate a hysteresis effect. Specifically, with reference to Fig. 10, the output hub 60 is provided with a coupling section 61 for circumferentially locking the output hub 60 and the drive plate 20 in a form-fitting manner. The first bushing 70a is axially biased against a first end face 61a of the coupling section 61 by the second hysteresis spring 5. When the torque input assembly 110 and the torque output assembly 120 rotate relative to each other, the first bushing 70a rubs against the first end face 61a of the output hub 60, generating a fourth sub-hysteresis amount h4. The second bushing 70b comprises a first portion 70b1 and a second portion 70b2. Under the axial bias of the third hysteresis spring 7, the first portion 70b1 abuts against the drive plate 20. When the torque input assembly 110 and the torque output assembly 120 rotate relative to each other, the first portion 70b1 of the second bushing 70b rubs against the drive plate 20, generating a fifth sub-hysteresis amount h5.

The fourth sub-hysteresis amount h4 and the fifth sub-hysteresis amount h5 each constitute a part of the second hysteresis amount H2 of the second hysteresis assembly 4. Regardless of whether the torque input assembly 110 is at the positive position or the negative position, when the torque input assembly 110 and the torque output assembly 120 rotate relative to each other, the relevant components of the second hysteresis assembly 4 can each play a hysteresis role, generating the second hysteresis amount H2=h4+h5.

In summary, when the torque input assembly 110 is at the negative position, both the first hysteresis assembly 2 and the second hysteresis assembly 4 can play a hysteresis role, and the torque transmission device 100 has a total hysteresis amount H=H1+H2. When the torque input assembly 110 is at the positive position, only the second hysteresis assembly 4 can play a hysteresis role, and the torque transmission device 100 has a total hysteresis amount H=H2.

When the vehicle starts, the torque output by the engine fluctuates greatly, and the torque input assembly 110 may reciprocally rotate between the positive position and the negative position. When the torque input assembly 100 is at the negative position, the torque transmission device 100 has a large total hysteresis amount H=H1+H2, so that such torque fluctuations can be quickly attenuated, enhancing the smoothness of vehicle start-up. When the vehicle is running normally, the torque output by the engine fluctuates slightly, and the torque input assembly 110 is always at the positive position of applying torque to the wheels. The torque transmission device 100 has a small total hysteresis amount H=H2, which can improve the response speed of the torque transmission device to the torque change, thereby improving the dynamic response sensitivity of the vehicle.

When the vehicle is turned off, the torque output by the engine decreases, the torque input assembly 110 gradually returns to the zero position from the positive position, only the second hysteresis assembly 4 plays a hysteresis role, and the torque transmission device 100 has a total hysteresis amount H=H2. However, the vibrations generated during the process of turning off the vehicle are relatively large. In order to more quickly attenuate such vibrations and improve the ride comfort of the vehicle, it is necessary to appropriately increase the hysteresis amount of the torque transmission device, that is, it is necessary to increase the second hysteresis amount H2 of the second hysteresis assembly 4.

To this end, the second hysteresis assembly 4 according to the present disclosure is further provided with a collar 6. With reference to Fig. 3 and in combination with Fig. 9, the collar 6 comprises a radial ring 6a and an axial ring 6b, wherein the radial ring 6a is clamped between the second radial extension portion 32 of the retaining plate 30 and the drive plate 20, and the axial ring 6b is inserted into the axial extension portion 33 of the retaining plate 30. The collar 6 is not locked with other components of the torque transmission device 100 in the circumferential direction, but can freely rotate about the axis of rotation X. Therefore, when the retaining plate 30 and the drive plate 20 rotate relative to each other, the collar 6 located therebetween will rub against the retaining plate 30 and/or the drive plate 20. Such friction will also retard the relative rotation between the torque input assembly 110 and the torque output assembly 120, generating a third sub-hysteresis amount h3 which constitutes a part of the second hysteresis amount H2.

The torque transmission device 100 according to the present disclosure further increases the length of the coupling section 61 of the output hub 60, so that the second portion 70b2 of the second bushing 70b can be biased by the third hysteresis spring 7 to abut against a second end face 61b of the coupling section 61. When relative rotation occurs between the torque input assembly 110 and the torque output assembly 120, the second portion 70b2 of the second bushing 70b rubs against the second end face 61b, generating a sixth sub-hysteresis amount h6 which constitutes a part of the second hysteresis amount H2.

Therefore, the second hysteresis assembly 4 of the torque transmission device 100 according to the present disclosure has a second hysteresis amount H2=h3+h4+h5+h6. As an example, by additionally providing the third sub-hysteresis amount h3 and the sixth sub-hysteresis amount h6, the second hysteresis amount H2 can be increased from about 5-12 newton-meters (Nm) to about 10-20 newton-meters, so that the vibrations during the process of turning off the vehicle can be quickly attenuated.

In addition, in the exemplary embodiment of the first hysteresis assembly 2 shown in Fig. 12, the circumferential spacing between the first stop teeth 81 of the intermediate plate 80 is set to be larger than the circumferential size of the second stop teeth 41 of the hysteresis plate 40. Therefore, the hysteresis plate 40 and the intermediate plate 80 are not completely locked in the circumferential direction, but can rotate relative to each other within a certain angle range (e.g., about 3°). Only after the torque input assembly 110 rotates towards the negative position relative to the torque output assembly 120 in the second circumferential direction beyond the angle range, the hysteresis plate 40 will be driven by the intermediate plate 80 and rotate with the torque output assembly 120. At this time, the first hysteresis assembly 2 can play a hysteresis role, generating the first hysteresis amount H1. In other words, the first hysteresis assembly 2 will work only when the torque input assembly 110 is at the negative position and the torque fluctuation is large, and the total hysteresis amount of the torque transmission device 100 is H = H1 + H2. Even if the torque input assembly 110 is in the negative position but the torque fluctuation is small, the first hysteresis assembly 2 will not work, the first hysteresis assembly 2 will work, and the total hysteresis amount of the torque transmission device 100 is H=H2. This configuration of the first hysteresis assembly 2 helps to reduce the total hysteresis amount of the torque transmission device 100 when the torque fluctuation is small.

It can be understood that the circumferential spacing between the first stop teeth 81 of the intermediate plate 80 can also be set to be substantially equal to the circumferential size of the second stop teeth 41 of the hysteresis plate 40, so as to substantially completely lock the hysteresis plate 40 and the intermediate plate 80 in the circumferential direction. In this configuration, as long as the torque input assembly 110 is at the negative position, the first hysteresis assembly 2 will play a hysteresis role, and the total hysteresis amount of the torque transmission device 100 is H=H1+H2.

According to another aspect of the present disclosure, there is proposed a vehicle comprising the transmission assembly 1 as described previously. The vehicle is particularly a hybrid vehicle.

Certain features, structures or characteristics in one or more embodiments of the present disclosure may be combined appropriately.

The above is an explanation of the present disclosure and should not be considered as a limitation thereof. Although several exemplary embodiments of the present disclosure are described, it will be readily appreciated by those skilled in the art that many modifications may be made to the exemplary embodiments without departing from the novel teachings and advantages of the present disclosure. Therefore, all such modifications are intended to be included in the scope of the present disclosure as defined by the claims. It should be understood that the above is an explanation of the present disclosure and the present disclosure should not be considered to be limited to the specific embodiments disclosed, and that modifications to the disclosed embodiments and other embodiments are intended to be included within the scope of the present disclosure.

## Claims

1. A torque transmission device (100), comprising:
a torque input assembly (110) arranged around an axis of rotation (X), comprising a first cover plate (10a);
a torque output assembly (120) arranged around the axis of rotation (X), comprising a drive plate (20), wherein when the torque input assembly (110) and the torque output assembly (120) do not rotate relative to each other, the torque input assembly (110) is at a zero position, the torque input assembly (110) is able to rotate relative to the torque output assembly (120) from the zero position along a first circumferential direction to a positive position, and the torque input assembly (110) is able to rotate relative to the torque output assembly (120) from the zero position along a second circumferential direction to a negative position, the second circumferential direction being opposite to the first circumferential direction;
a first hysteresis assembly (2) arranged to retard the relative rotation between the torque input assembly (110) and the torque output assembly (120) by means of friction, the first hysteresis assembly (2) having a first hysteresis amount H1; and
a second hysteresis assembly (4) arranged to retard the relative rotation between the torque input assembly (110) and the torque output assembly (120) by means of friction, the second hysteresis assembly (4) having a second hysteresis amount H2;
wherein when the torque input assembly (110) is at the negative position, the first hysteresis assembly and the second hysteresis assembly both play a hysteresis role, so that the relative rotation between the torque input assembly (110) and the torque output assembly (120) is subjected to a total hysteresis amount H=H1+H2; and
when the torque input assembly (110) is at the positive position, only the second hysteresis assembly plays a hysteresis role, so that the relative rotation between the torque input assembly (110) and the torque output assembly (120) is subjected to a total hysteresis amount H=H2.

2. The torque transmission device (100) according to claim 1, **characterised in that** the first hysteresis assembly (2) comprises:
a retaining plate (30) fastened to the first cover plate (10a), wherein the first cover plate (10a) and the retaining plate (30) are axially located on a same side of the drive plate (20);
a hysteresis plate (40), wherein the hysteresis plate (40) is axially arranged between the first cover plate (10a) and the retaining plate (30); and
a first hysteresis spring (3), wherein the first hysteresis spring (3) is axially arranged between the first cover plate (10a) and the hysteresis plate (40) and axially biases the hysteresis plate (40) against the retaining plate (30),
wherein when the torque input assembly (110) is at the negative position, the hysteresis plate (40) is circumferentially coupled to the torque output assembly (120) so as to rotate relative to the retaining plate (30), and friction between the hysteresis plate (40) and the retaining plate (30) generates a first sub-hysteresis amount h1 which constitutes at least a part of the first hysteresis amount H1, and
wherein when the torque input assembly (110) is at the positive position, the hysteresis plate (40) is able to freely rotate relative to the torque output assembly (120).

3. The torque transmission device (100) according to claim 2, **characterised in that** the second hysteresis assembly (4) comprises:
a collar (6), wherein the collar (6) is clamped between the retaining plate (30) and the drive plate (20), the collar (6) is able to freely rotate about the axis of rotation (X) so as to rotate relative to the retaining plate (30) and/or the drive plate (20), friction between the collar (6) and the drive plate (20) and/or the retaining plate (30) generates a third sub-hysteresis amount h3 which constitutes a part of the second hysteresis amount H2.

4. The torque transmission device (100) according to claim 3, **characterised in that**
the torque output assembly (120) further comprises an output hub (60) circumferentially fastened to the drive plate (20), and
the second hysteresis assembly (4) further comprises:
a first bushing (70a) configured to be sleeved on the output hub (60) and circumferentially locked relative to the first cover plate (10a); and
a second hysteresis spring (5), wherein the second hysteresis spring (5) is axially arranged between the first cover plate (10a) and the first bushing (70a) and axially biases the first bushing (70a) against the output hub (60),
wherein friction between the first bushing (70a) and the output hub (60) generates a fourth sub-hysteresis amount h4 which constitutes a part of the second hysteresis amount H2.

5. The torque transmission device (100) according to claim 4, **characterised in that**
the torque input assembly (110) further comprises a second cover plate (10b) fastened to the first cover plate (10a), the second cover plate (10b) and the first cover plate (10a) being respectively located on two axial sides of the drive plate (20), and
the second hysteresis assembly (4) further comprises:
a second bushing (70b) configured to be sleeved on the output hub (60) and circumferentially locked relative to the first cover plate (10a), the second bushing (70b) and the first bushing (70a) being respectively located on two axial sides of the drive plate (20); and
a third hysteresis spring (7), wherein the third hysteresis spring (7) is axially arranged between the second cover plate (10b) and the second bushing (70b) and axially biases the second bushing (70b) towards the drive plate (20),
wherein the second bushing (70b) comprises a first portion (70b1) biased against the drive plate (20), and friction between the first portion and the drive plate (20) generates a fifth sub-hysteresis amount h5 which constitutes a part of the second hysteresis amount H2.

6. The torque transmission device (100) according to claim 5, **characterised in that**
the second bushing (70b) further comprises a second portion (70b2) axially biased against the output hub (60), and friction between the second portion and the output hub (60) generates a sixth sub-hysteresis amount h6 which constitutes a part of the second hysteresis amount H2,
and optionally wherein
the output hub (60) is provided with a coupling section (61) which is circumferentially locked with the drive plate (20) in a form-fitting manner,
the first bushing (70a) is axially biased against a first end face (61a) of the coupling section (61), and
the second portion (70b2) of the second bushing (70b) is axially biased against a second end face (61b) of the coupling section (61).

7. The torque transmission device (100) according to any one of claims 2 to 6, **characterised in that**
the first hysteresis assembly (2) further comprises a pressure plate (50) configured to be circumferentially locked relative to the first cover plate (10a), wherein the pressure plate (50) is axially arranged between the first hysteresis spring (3) and the hysteresis plate (40), so that the first hysteresis spring (3) axially biases the pressure plate (50) against the hysteresis plate (40),
wherein when the torque input assembly (110) is at the negative position, the hysteresis plate (40) rotates relative to the pressure plate (50), and friction between the hysteresis plate (40) and the pressure plate (50) generates a second sub-hysteresis amount h2 that constitutes at least a part of the first hysteresis amount H1.

8. The torque transmission device (100) according to any one of claims 2 to 7, **characterised in that** the first hysteresis assembly (2) further comprises:
an intermediate plate (80), the intermediate plate (80) being circumferentially coupled to the hysteresis plate (40),
wherein when the torque input assembly (110) is at the negative position, the intermediate plate (80) rotates together with the drive plate (20), and
wherein when the torque input assembly (110) is at the positive position, the intermediate plate (80) is able to freely rotate relative to the drive plate (20).

9. The torque transmission device (100) according to claim 8, **characterised in that**
the torque transmission device (100) further comprises a damping spring (130) configured to be circumferentially compressed between the torque input assembly (110) and the torque output assembly (120),
wherein the drive plate (20) is provided with a spring slot (21) configured to accommodate the damping spring (130), and the intermediate plate (80) comprises a first drive tooth (82) extending into the spring slot (21) at a circumferential end of the spring slot (21),
wherein when the torque input assembly (110) is at the negative position, the damping spring (130) presses the first drive tooth (82) circumferentially against the circumferential end of the spring slot (21), and
wherein when the torque input assembly (110) is at the positive position, the damping spring (130) no longer biases the first drive tooth (82),
and optionally wherein the hysteresis plate (40) comprises a second drive tooth extending into the spring slot (21) at a circumferential end of the spring slot (21),
when the torque input assembly (110) is at the negative position, the damping spring (130) presses the second drive tooth circumferentially against the circumferential end of the spring slot (21), and
when the torque input assembly (110) is at the positive position, the damping spring (130) no longer biases the second drive tooth.

10. The torque transmission device (100) according to claim 8 or 9, **characterised in that**
the intermediate plate (80) comprises first stop teeth (81) extending axially towards the hysteresis plate (40), and
the hysteresis plate (40) comprises radially extending second stop teeth (41), wherein the second stop tooth (41) is inserted into a circumferential spacing between two adjacent first stop teeth (81),
and optionally wherein
the circumferential spacing between the first stop teeth (81) of the intermediate plate (80) is greater than a circumferential dimension of the second stop teeth (41) of the hysteresis plate (40), or
the circumferential spacing between the first stop teeth (81) of the intermediate plate (80) is substantially equal to the circumferential dimension of the second stop teeth (41) of the hysteresis plate (40).

11. The torque transmission device (100) according to any of claims 2 to 10, **characterised in that**
the retaining plate (30) comprises a first radial extension portion (31), a second radial extension portion (32) located radially outside the first radial extension portion and axially spaced apart from the first radial extension portion (31), and an axial extension portion (33) connecting the first radial extension portion (31) and the second radial extension portion (32),
wherein the retaining plate (30) is riveted to the first cover plate (10a) at the first radial extension portion (31), and the hysteresis plate (40) is arranged between the first cover plate (10a) and the second radial extension portion (32),
and optionally wherein
a collar (6) comprises a radial ring (6a) and an axial ring (6b), wherein the radial ring (6a) is clamped between the second radial extension portion (32) of the retaining plate (30) and the drive plate (20), and the axial ring (6b) is inserted into the axial extension portion (33).

12. The torque transmission device (100) according to claim 7, **characterised in that**
locking holes (11) are provided on the first cover plate (10a), and the pressure plate (50) comprises locking teeth (51) extending axially towards the first cover plate (10a) and inserted into the locking holes (11), wherein the locking teeth (51) and the locking holes (11) have substantially equal circumferential dimensions.

13. The torque transmission device (100) according to claim 5 or 6, **characterised in that**
the collar (6), the retaining plate (30), the hysteresis plate (40) and/or the output hub (60) are made of metal, and
the first bushing (70a) and/or the second bushing (70b) are made of plastic.

14. A transmission assembly (1), **characterised in that** the transmission assembly (1) comprises:
the torque transmission device (100) according to any one of claims 1 to 13, and
a torque limiter (200) comprising an input portion (210) and an output portion (220), wherein the torque limiter (200) is configured to transmit a torque less than a predetermined threshold from the input portion (210) to the output portion (220),
wherein the output portion (220) of the torque limiter (200) is circumferentially locked with the torque input assembly (110) of the torque transmission device (100).

15. A vehicle, **characterised in that** the vehicle comprises the transmission assembly (1) according to claim 14.
